# EUROPEAN PATENT SPECIFICATION

(11) **EP 1 888 980 B1**
(45) Date of publication and mention of the grant of the patent: **20.08.2008**
(21) Application number: 06783825.0
(22) Date of filing: 02.06.2006
(51) Int. Cl.: F24J 2/34

(54) **SOLAR COLLECTOR HAVING AN INTEGRATED HEAT STORAGE**
SONNENKOLLEKTOR MIT INTEGRIERTER WÄRMESPEICHERUNG
CAPTEUR SOLAIRE MUNI D'UN MOYEN DE STOCKAGE DE LA CHALEUR INTEGRE

(30) Priority: 02.06.2005 NL 1029168
(43) Date of publication of application: 20.02.2008
(73) Proprietor: Econcern BV, 3526 KL Utrecht (NL)
(72) Inventor: SCHAAP, Antonius, Bernardus, NL-1222 LN Hilversum (NL)
(74) Representative: Habets, Winand
(86) International application number: PCT/NL2006/000276
(87) International publication number: WO 2006/130006

(56) References cited:
- EP-A- 0 743 495
- WO-A-95/04904
- US-A- 4 355 629
- US-A- 4 520 795
- US-A- 4 586 227

## Description

The present invention relates to a solar collector having an integrated heat storage, in which said solar collector comprises a housing comprising a bottom plate and a transparent cover plate, where in the housing between an involute mirror and the transparent cover plate a storage tank for the storage of water is provided and the storage tank is provided with a light radiation absorbing fin.

A solar collector of this type, also indicated as ICS (Integrated Collector Storage), is known in the art, for example from EP0743495. A solar collector of this type comprises a housing having an elongated shape in which an elongated storage tank is situated. This storage tank is devised to absorb solar heat. In order to increase the yield, an involute mirror facing the transparent cover plate is arranged under the storage tank, allowing the storage tank to collect and absorb light radiation from the bottom as well. The known solar collector also has a fin extending over the length of the storage tank at the side facing the mirror and at both ends in order to increase the yield. With a solar collector of this type, water in the storage tank can be heated and can then be used for various purposes, often being domestic purposes. In particular, it can be used for taking a bath, taking a shower, doing the dishes and the like. In practice, the fins at the far ends of the storage tank of the ICS according to EP0743495 had a length of 6 cm. The height of the fin extending lengthwise over the storage tank and facing the involute mirror was 5 cm. The purpose of the fins was to increase the thermal yield. In practice, however, measurements surprisingly showed that the fins conduce to heat losses.

An ICS storage tank has to be able to withstand high pressures which may occur due to variable water supply pressures. Therefore, a storage tank of this type preferably has a less elongated shape. However, since the ICS light absorbing area, which is formed by the projection area of both tank and involute mirror, increases linearly with the diameter of the storage tank while the volume of the storage tank increases squarely with the diameter, in practice a highly elongated storage tank is still used.

Accordingly, the object of the present invention is to increase the thermal yield of a solar collector having an integrated heat storage (ICS). A further object is to provide an ICS of which the ratio R_{dl} between diameter and length may be greater than that of an ICS according to the state of the art, yet having a similar thermal yield.

Therefore, the solar collector according to the invention is characterized in that the storage tank has a lower end and an upper end, the lower end near the circumference of the storage tank being provided with a fin system equipped for the transfer of heat onto the storage tank, which fin system comprises a light absorbing fin having a longitudinal component in the longitudinal direction of the storage tank of at least 10 cm, and the fin system is designed such that when the fin system is projected from a point at the lower end of the storage tank situated on the center line through the storage tank on a virtual unit sphere situated outside the fin system having that point as a center, the projected area (as shielded by the fin system) covers at least 25% of the area of the virtual unit sphere.

Thus, it is achieved that radiation emitted by the lower end of the storage tank or radiation emitted by the fin system, optionally after further (optionally diffusional) reflection against the inside of the fin system, has a greater chance of being reflected against the lower end of the storage tank by the fin system. The emitted heat radiation may also be re-absorbed by the fin system, which will contribute to the reduction of ICS heat-energy losses as well. The fin area, which is larger because of its greater length in the longitudinal direction of the storage tank but optionally also larger because of the possibility to use a storage tank with a greater radius, provides a greater absorbance of light energy, whereas the fin system also functions as a radiation shield in order to prevent heat radiation from escaping the ICS. The expression "25% of the area of a virtual unit sphere" indicates that when lines would be drawn in all directions from the point at the lower end of the storage tank, which point is situated at the center line through the storage tank, 25% of those lines would cross the fin system. The fin system is, for example, cylinder shaped. Strictly speaking, the term "involute" indicates a mathematically precisely defined curve, but within the scope of the present invention it includes any shape that throws light onto the storage tank and preferably a concave shape, more preferably a light concentrating shape. A mathematically involute shape is most preferred.

The length of the light absorbing fin in the longitudinal direction of the storage tank is preferably at least 15 cm, and more preferably at least 20 cm.

This makes it possible to absorb more light and to enlarge the ratio R_{dl} between the diameter and the length of the storage tank from 0.15 (practice of EP0743495) to over 0.20, more preferably 0,25 or higher. An indirect advantage thereof is a stronger storage tank (more capable of withstanding high pressures) and, if desired, it can be designed weighing less while being equally strong, in which case a cost saving is achieved.

According to an important embodiment the fin system is designed tapered away from the storage tank.

In this way a more effective shielding of the lower end of the storage tank is achieved which limits heat losses. Losses due to convection (of air) will also be limited. For the latter, it is preferred that the fin system comprises a fin which is situated above the center line of the tank and which preferably extends from the upper side of the tank and the lower end thereof to below the center line. In this way, rising air heated by the lower end of the tank is stopped and carrying off of heat is hindered.

A preferred embodiment is characterized in that the fin of the fin system at the side of the transparent cover plate forms an angle with the center line that is more obtuse than that at the side of the involute mirror.

Advantageously, the design of the involute mirror can be relatively simple without leading to loss of light and consequent loss of yield. In this embodiment it is also possible that at the side of the involute mirror at least part of the fin system runs parallel to the center line of the storage tank.

A very interesting embodiment is characterized in that the fin system includes a heat transporting pipe which connects the light absorbing fin to the storage tank.

According to a very favorable embodiment this is a pipe having two ends which both open in the storage tank while the pipe is in heat transferring contact with the light absorbing fin. The first end of the pipe is situated lower than the second end. Because of this, when the light absorbing fin heats the water in the pipe, a flow is generated in the pipe whereby water from a lower part of the storage tank is heated in the pipe and ends up in the storage tank via the second end of the pipe. Thanks to this efficient embodiment the ratio R_{dl} between the diameter and the length of the storage tank can be increased significantly, for example from 0.15 (practice of EP0743495) to 0.30 or higher, for example 0.35 or higher and preferably 0.50 or higher. Absence of solar radiation will stop this flow, limiting heat losses. Any heat losses are also limited by the fin system according to the invention when the heat transporting pipe, for example the pipe, is situated within the fin system.

According to an alternative embodiment the heat transporting pipe is a heat-pipe.

Using this heat-pipe heat can also be transported from the fin system to the storage tank efficiently, having the same advantages with respect to the embodiment having a pipe, as discussed before.

According to a preferred embodiment at least 30%, and more preferably at least 35% of the virtual area of a unit sphere having the point as its center, is covered by the fin system.

Thus, loss of energy via the lower end of the storage tank can be prevented in a better way.

The present invention will now be elucidated with reference to the drawings, in which
fig. 1 represents a top view of a solar collector according to the invention;
fig. 2 represents a cross-section through the solar collector of fig. 1 along the line II-II;
fig. 3 represents a cross-section through the solar collector of fig. 1 along the line III-III;
fig. 4 represents a schematic view of a storage tank of the solar collector according to fig. 1 provided with a fin system;
fig. 5 - 7 represent cross-sections according to fig. 3 of variations of embodiments of the solar collector according to the invention.

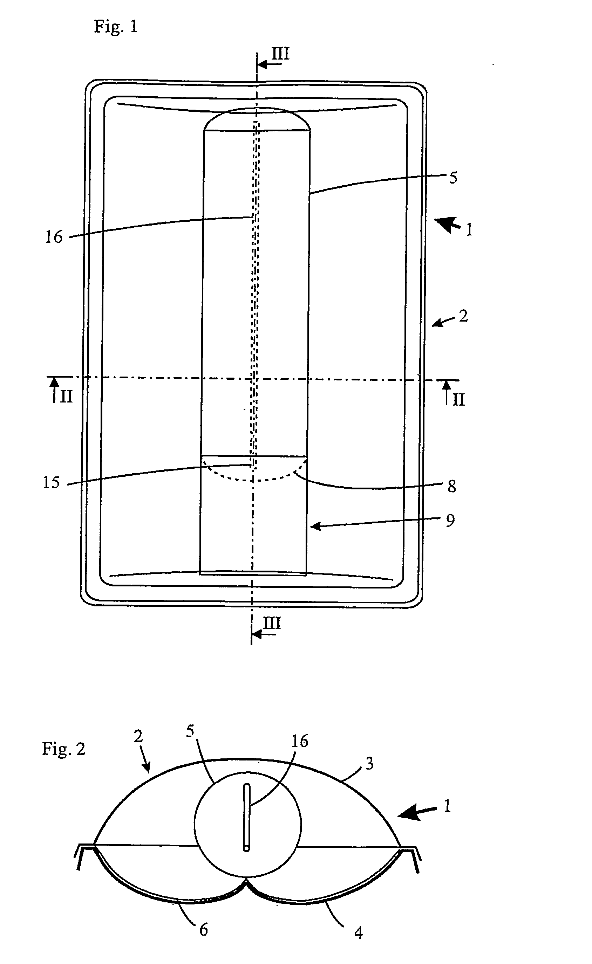

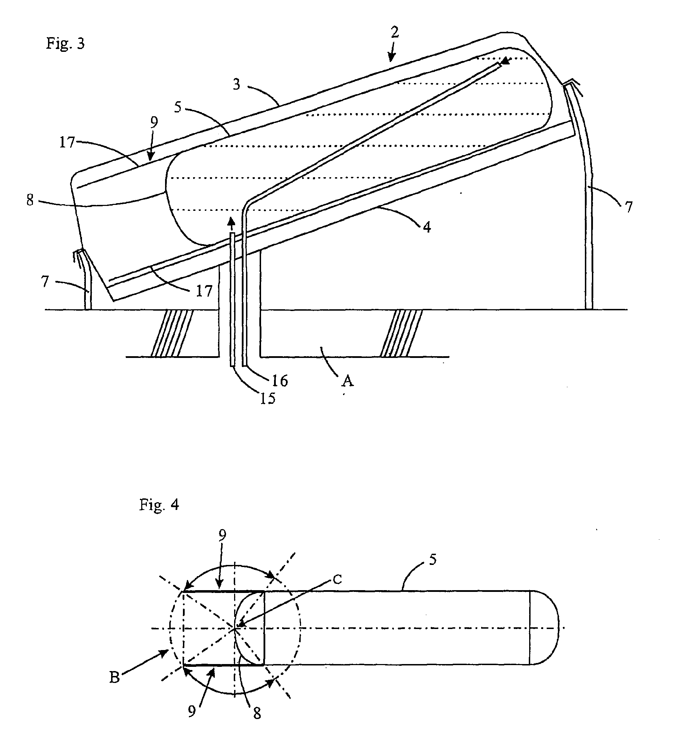

Fig. 1 shows a top view of a solar collector 1 according to the invention. The solar collector 1 comprises a housing 2 comprising a transparent cover plate 3, which is suitably manufactured from perspex, and a bottom plate 4 (fig. 2 and 3). Within the housing 2 a storage tank 5 is situated. During operation, this storage tank 5 is directly heated by solar radiation and in order to efficiently absorb this, it is provided with an absorbing layer (not shown), which is known in itself. The absorbing layer is, for example, a spectral selective coating, which radiates little heat. A coating of this type is known from DE4433863. In order to increase the thermal yield, the solar collector 1 also comprises a mirror 6, preferably an involute mirror 6. This concentrates light and reflects it onto the storage tank 5, including onto the bottom thereof.

In practice, the solar collector 1 will be positioned such that the storage tank 5 is in a inclined position. In the case where the solar collector 1 is positioned on the floor or on a flat roof A (fig. 3, 5 - 7) or the like, it will be provided with legs 7 (fig. 3). It is also possible to position the solar collector 1 with 1 end on an elevation, such as a small wall. The solar collector 1 may also be positioned on the sloped roof of a house.

When positioning the solar collector 1 according to the invention such that the storage tank 5 is in a inclined position, an increased yield can be achieved. Not only because of a better absorption of solar radiation (in areas outside the tropics), but also by more efficiently using the formation of layers of hot water on top of water that is less hot, in the storage tank 5.

For feeding the storage tank 5 with water and for discharging it again, a feed pipe 15 and a discharge pipe 16 are provided. Please note that the mouth of the discharge pipe 16 is situated higher than the mouth of the feed pipe 15, as a result of which relatively hot water will be drained off via the discharge pipe 16 because of the formation of layers.

In accordance with the present invention, the storage tank 5 is provided at a first end 8 with a fin system 9 comprising a light absorbing fin 17 which is designed to transfer heat to the storage tank 5. Because in practice the solar collector 1 will usually be mounted in a inclined position in order to increase the yield, this first end 8 will then be the lower end. The fin 17 of the fin system 9 has a length, measured in the longitudinal direction of the storage tank 5, of at least 10 cm, but preferably the fin 17 is longer. The fin 17 of the fin system 9 shields the lower end of the storage tank 5 from radiation. Thus, heat losses by radiation from the lower end of the storage tank 5 are restricted, whereas the thermal yield is increased. In this way the fin 17 of the fin system 9 has two functions in increasing the thermal yield of the solar collector 1 according to the invention.

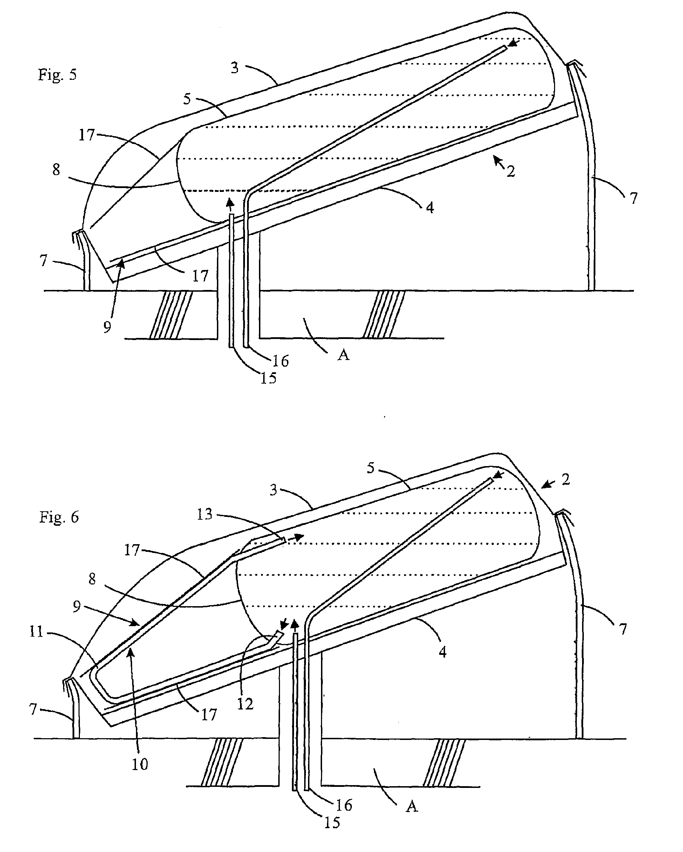

Fig. 4 shows that the center line through the storage tank 5 and the first end 8 thereof, define a point C which is the center of a virtual sphere B situated outside the fin system 9. When the fin system 9 is projected on the virtual sphere B from the defined point, at least 25% of the area of the virtual sphere B is covered. Because heat radiation transmitted by the first end 8 of the storage tank 5 is most probably transmitted in the direction of the fin system 9, there is a possibility that this radiation will be absorbed by the fin system 9 and thus will be transported back towards the storage tank 5. It is also possible that the heat radiation is reflected to the storage tank 5 by diffuse (light scattering) reflection. When the fin system 9 has a tapered shape (figs. 5 - 7), it is also possible that heat radiation is reflected back towards the first end 8 of storage tank 5 by means of non-diffuse reflection. With apologies to mechanical engineers and technical draughtsmen, the view line at the end away from the first end 8 of the fin system 9 has been left out in order to make clear that the fin systems 9 as described here, are open at that end even though, according to the invention, they may be closed, if so desired.

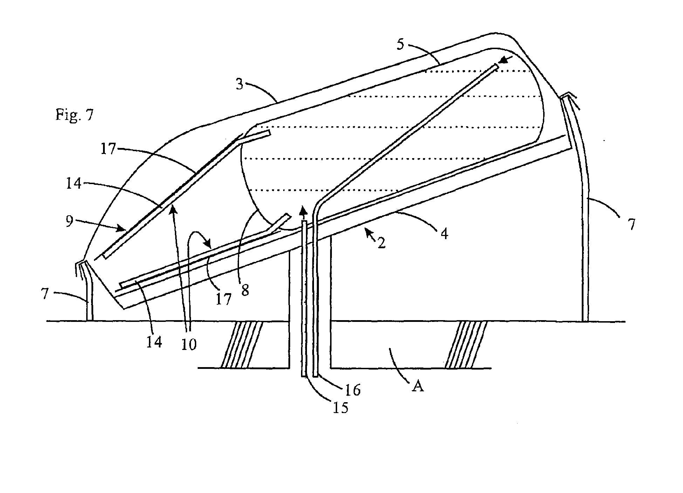

According to the invention the fin system 9 may have a heat transfer system 10 for increasing the thermal yield. According to an embodiment (fig. 6) that can be realized very easily, this includes a pipe 11 having a first pipe end 12 and a second pipe end 13. In this embodiment it is important that the second pipe end 13 is situated higher than the first pipe end 12. When the fin 17 of the fin system 9 is heated up, the water in the pipe 11 will be heated and, via the second pipe end 13, end up in the storage tank 5 by convection. Water that is relatively colder, is fed into the pipe 11 via the first pipe end 12. In case of insufficient heat radiation on the fin system 9, this convection of water via the pipe 11 will come to a halt and heat losses are avoided. Thanks to the fin system 9, the heat radiation from the pipe 11 will not necessarily lead to heat losses. Instead of a pipe 11 connected to the storage tank 5 through which water flows out of the storage tank 5, a heatpipe 14 (fig. 7) may also be used, which has the same function and has the advantages as described for the pipe 11.

## Claims

1. Solar collector having an integrated heat storage (5), in which said solar collector (1) comprises a housing (2) comprising a bottom plate (4) and a transparent cover plate (3), where in the housing (2) between an involute mirror (6) and the transparent cover plate (3) a storage tank (5) for the storage of water is provided and the storage tank (5) is provided with a light radiation absorbing fin (17), **characterized in that** the storage tank has a lower end (8) and an upper end, the lower end (8) near the circumference of the storage tank (5) being provided with a fin system (9) designed for the transfer of heat onto the storage tank (5), which fin system comprises a light absorbing fin (17) having a longitudinal component in the longitudinal direction of the storage tank (5) of at least 10 cm, and the fin system (9) is designed such that, when the fin system (9) is projected from a point (C) at the lower end (8) of the storage tank (5) situated on the center line through the storage tank (5) on a virtual unit sphere (B) situated outside the fin system (9) having that point (C) as a center, the projected area (as shielded by the fin system (9)) covers at least 25% of the area of the virtual unit sphere (B).

2. Solar collector (1) according to claim 1, in which the length of the light absorbing fin (17) in the longitudinal direction of the storage tank (5) is at least 15 cm, and preferably at least 20 cm.

3. Solar collector (1) according to claim 1 or 2, in which the fin system (9) is designed tapered away from the storage tank (5).

4. Solar collector (1) according to claim 3, in which the fin (17) of the fin system (9) at the side of the transparent cover plate (3) is at an angle with the center line that is more obtuse than that at the side of the involute mirror (6).

5. Solar collector (1) according to any of the preceding claims, in which the fin system (9) comprises a pipe for heat transfer (10) which connects the light absorbing fin (17) with the storage tank (5).

6. Solar collector according to claim 5, in which the pipe for heat transfer (10) is a heat-pipe (14).

7. Solar collector (1) according to any of the preceding claims, in which at least 30%, and more preferably at least 35% of the virtual area of a unit sphere (B) having the point (C) as a center is covered by the fin system (9).

## Patentansprüche

1. Sonnenkollektor mit einem integrierten Wärmespeicher (5),
wobei der Sonnenkollektor (1) ein Gehäuse (2) aufweist, welches eine Bodenplatte (4) und eine transparente Abdeckplatte (3) umfasst,
wobei in dem Gehäuse (2) zwischen einem rinnenartigen Spiegel (6) und der transparenten Abdeckplatte (3) ein Vorratsbehälter (5) zum lagern von Wasser vorgesehen ist
und der Vorratsbehälter (5) mit einer lichtstrahlungsabsorbierenden Lamelle (17) ausgestattet ist,
**dadurch gekennzeichnet,**
**dass** der Vorratsbehälter ein unteres Ende (8) und ein oberes Ende besitzt,
**dass** das untere Ende (8) nahe des Umfangs des Vorratsbehälters (5) mit einem Lamellensystem (9) ausgestattet ist, welches dazu dient, Wärme auf den Vorratsbehälter (5) zu übertragen,
**dass** das Lamellensystem eine lichtabsorbierende Lamelle (17) mit einer längsgerichteten Komponente von mindestens 10cm in Längsrichtung des Vorratsbehälters (5) aufweist
und **dass** das Lamellensystem (9) so gestaltet ist, dass wenn das Lamellensystem (9) von einem Punkt (C) am unteren Ende (8) des Vorratsbehälters (5) auf der Mittellinie durch den Vorratsbehälter (5) auf einen virtuellen Kreis (B) außerhalb des Lamellensystems (9) mit dem Punkt (C) als Mittelpunkt ausgerichtet wird, die projizierte Fläche (welche von dem Lamellensystem (9) abgedeckt wird) mindestens 25% der Kreisfläche des virtuellen Kreises (B) einnimmt.

2. Sonnenkollektor (1) nach Anspruch 1, **dadurch gekennzeichnet, dass** die Länge der lichtabsorbierenden Lamelle (17) in Längsrichtung des Vorratsbehälters (5) mindestens 15cm, vorzugsweise jedoch mindestens 20cm beträgt

3. Sonnenkollektor (1) nach Anspruch 1 oder 2, **dadurch gekennzeichnet, dass** das Lamellensystem (9) sich vom Vorratsbehälter (5) aus verjüngt.

4. Sonnenkollektor (1) nach Anspruch 3, **dadurch gekennzeichnet, dass** die Lamelle (17) des Lamellensystems (9) an der Seite der transparenten Abdeckplatte (3) in einem Winkel zur Mittellinie verläuft, welcher stumpfer ist als der an der Seite des rinnenartigen Spiegels (6).

5. Sonnenkollektor (1) nach einem der Ansprüche 1 bis 4, **dadurch gekennzeichnet, dass** das Lamellensystem (9) ein Rohr für den Wärmeaustausch (10) enthält, welches die lichtabsorbierende Lamelle (17) mit dem Vorratsbehälter (5) verbindet.

6. Sonnenkollektor (1) nach Anspruch 5, **dadurch gekennzeichnet, dass** das Rohr für den Wärmeaustausch (10) ein Wärmerohr (14) ist.

7. Sonnenkollektor (1) nach einem der Ansprüche 1 bis 6, **dadurch gekennzeichnet, dass** mindestens 30%, vorzugsweise jedoch mindestens 35% des virtuellen Kreises (B) mit dem Mittelpunkt (C) vom Lamellensystem (9) abgedeckt wird.

## Revendications

1. Capteur solaire ayant un accumulateur thermique (5) intégré, dans lequel ledit capteur solaire (1) comprend un logement (2) comprenant une plaque inférieure (4) et une plaque de couverture transparente (3), où dans le logement (2) entre un miroir à développante (6) et la plaque de couverture transparente (3) un réservoir de stockage (5) pour le stockage de l'eau est placé et le réservoir de stockage (5) est pourvu d'une ailette d'absorbation de rayonnement lumineux (17), **caractérisé en ce que** le réservoir de stockage a une extrémité inférieure (8) et une extrémité supérieure, l'extrémité inférieure (8) près de la circonférence du réservoir de stockage (5) étant pourvu d'un système d'ailettes (9) conçu pour le transfert thermique sur le réservoir de stockage (5), lequel système d'ailettes comprend une ailette d'absorbation de lumière (17) ayant un composant longitudinal dans la direction longitudinale du réservoir de stockage (5) d'au moins 10 cm, et le système d'ailettes (9) est conçu de telle manière que, quand le système d'ailettes (9) fait saillie depuis un point (C) à l'extrémité inférieure (8) du réservoir de stockage (5) situé sur la ligne centrale à travers le réservoir de stockage (5) sur une sphère unitaire virtuelle (B) située à l'extérieur du système d'ailettes (9) ayant ce point (C) comme centre, la zone saillante (protégée par le système d'ailettes (9)) couvre au moins 25% de l'aire de la sphère unitaire virtuelle (B).

2. Capteur solaire (1) selon la revendication 1, dans lequel la longueur de l'ailette d'absorbation de lumière (17) dans la direction longitudinale du réservoir de stockage (5) est au moins de 15 cm, et de préférence d'au moins 20 cm.

3. Capteur solaire (1) selon la revendication 1 ou 2, dans lequel le système d'ailettes (9) est conçu comme conique vers l'extérieur depuis le réservoir de stockage (5).

4. Capteur solaire (1) selon la revendication 3, dans lequel l'ailette (17) du système d'ailettes (9) du côté de la plaque de couverture transparente (3) fait un angle avec la ligne centrale qui est plus obtus que celui du côté du miroir à développante (6).

5. Capteur solaire (1) selon l'une quelconque des revendications précédentes, dans lequel le système d'ailettes (9) comprend un tuyau pour le transfert thermique (10) qui relie l'ailette d'absorbation de lumière (17) au réservoir de stockage (5).

6. Capteur solaire (1) selon la revendication 5, dans lequel le tuyau pour le transfert thermique (10) est un caloduc (14).

7. Capteur solaire (1) selon l'une quelconque des revendications précédentes, dans lequel au moins 30%, et plus préférablement au moins 35% de la surface virtuelle d'un sphère unitaire (B) ayant le point (C) en un centre est couverte par le système d'ailettes (9).
